# EUROPÄISCHE PATENTANMELDUNG

(11) **EP 4 032 674 A2**
(43) Veröffentlichungstag der Anmeldung: **27.07.2022**
(21) Anmeldenummer: 21210233.9
(22) Anmeldetag: 24.11.2021
(51) Int. Cl.: B28B 1/26, B28B 7/34, B28B 17/00, B29C 33/38, B29C 39/02, B29C 61/02, B32B 5/00

(54) **VERFAHREN ZUM HERSTELLEN EINES FORMTEILS FÜR EINE SCHLICKER-DRUCKGIESSFORM**

(30) Priorität: 20.01.2021 DE 102021101103
(71) Anmelder: Dorst Technologies GmbH & Co. KG, 82431 Kochel am See (DE)
(72) Erfinder: BAUER, Sebastian, 83676 Jachenau (DE); MENZEL, Roland Dr., 82431 Kochel am See (DE)
(74) Vertreter: Pfrang, Tilman

(57) **Zusammenfassung**

Die Erfindung betrifft ein Verfahren zum Herstellen eines Formteils für eine Schlicker-Druckgießform, umfassend mindestens eine offen-poröse Komponente (5), an die während des Schlickergusses der Schlicker anliegt, sowie eine dichte Komponente (7), die mit der offen-porösen Komponente (5) verbunden wird. Die Erfindung zeichnet sich ferner dadurch aus, dass die dichte Komponente (7), in zumindest noch nicht vollständig ausgehärtetem Zustand, innerhalb eines Zeitfensters nach einem Beginn und vor einem Ende eines Aushärtens der offen-porösen Komponente (5) mit derselben verbunden wird.

## Beschreibung

Die Erfindung betrifft ein Verfahren zum Herstellen eines Formteils für eine Schlicker-Druckgießform, ein System zum Durchführen des Verfahrens sowie ein Formteil für eine Schlicker-Druckgießform als solches.

Allgemein bekannt sind Schlicker-Druckgießformen zur Herstellung verschiedener Produkte, wie insbesondere Sanitärartikeln, beispielsweise Waschbecken oder Toilettenschüsseln. Eine Schlicker-Druckgießform wird aus mehreren Formteilen zusammengesetzt. Die Formteile werden zum Gießen von außen unter hohen Druck gesetzt und fest gegeneinander gespannt. Nachfolgend wird Schlicker in einen Formraum gegossen, der in einem Bereich zwischen den Formteilen ausgebildet wird. Ein Druck des Schlickers kann dabei mehrere bar betragen. Dadurch dringt Flüssigkeit aus dem Schlicker in die Wände der Formteile ein. Auf der Innenseite der Wände der Formteile legen sich die Feststoffe des Schlickers ab und bilden einen Scherben aus. Nach dem Druckgießen können die Formteile wieder auseinander bewegt werden, um den Scherben als Gussteil freizulegen.

Weiterhin ist es bekannt, dass solche Formteile mindestens zwei Komponenten aufweisen, nämlich eine offen-poröse Komponente (bzw. Schicht) und eine (flüssigkeits-)dichte Komponente (bzw. Schicht). In die offen-poröse Komponente dringt die Flüssigkeit des Schlickers ein, wobei eine Abdichtung des Formteils bzw. der Schlicker-Druckgießform nach außen durch die dichte Komponente (Schicht) erfolgt.

Hinsichtlich der Formteile ist es wichtig, dass diese möglichst exakt ausgebildet werden, um die damit herzustellenden Artikel (z. B. Sanitärartikel) möglichst einheitlich und wie gewünscht auszuformen. Beispielsweise wird zur Herstellung eines Formteils zunächst eine offen-poröse PMMA-Komponente bereitgestellt. Auf diese wird dann eine weitere (dichte) PMMA-Komponente (bzw. entsprechende Ausgangskomponente) aufgebracht und somit die beiden Komponenten miteinander verbunden. Es wird dabei als nachteilig angesehen, dass eine exakte Herstellung entsprechender Formteile entweder nicht oder bestenfalls mit großem Aufwand möglich ist.

Es ist daher Aufgabe der Erfindung, auf möglichst präzise Art und Weise ein Formteil für eine Schlicker-Druckgießform herzustellen, wobei der Aufwand dafür vergleichsweise gering sein soll.

Diese Aufgabe wird insbesondere durch die Merkmale des Anspruchs 1 gelöst.

Insbesondere wird die Aufgabe gelöst durch ein Verfahren zum Herstellen eines Formteils für eine Schlicker-Druckgießform, umfassend mindestens eine offen-poröse Komponente (Schicht), an die während des Schlickergusses der Schlicker anliegt, sowie eine dichte Komponente (Schicht), die mit der offen-porösen Komponente verbunden wird, wobei die dichte Komponente (in zumindest noch nicht vollständig ausgehärtetem Zustand, insbesondere flüssigem oder pastösem Zustand) innerhalb eines Zeitfensters nach einem Beginn und vor einem Ende eines Aushärtens der offen-porösen Komponente mit derselben verbunden wird.

Ein Kerngedanke der Erfindung liegt darin, die (z. B. flüssige, jedenfalls noch nicht vollständig ausgehärtete) dichte Komponente (bzw. eine entsprechende Ausgangskomponente) zu einem Zeitpunkt mit der offen-porösen Komponente zu verbinden, in der diese noch nicht vollständig ausgehärtet ist. Dabei wurde erfindungsgemäß erkannt, dass sowohl die offen-poröse Komponente als auch die dichte Komponente beim jeweiligen Aushärten auf verschiedene Art und Weise schrumpfen (sich also insbesondere die Schrumpfung durch die Geschwindigkeit und/oder Quantität unterscheidet). Beispielsweise ist es möglich, dass die offen-poröse Komponente während des Aushärtens um 10 % schrumpft (bezogen auf ihre Ausgangslänge bzw. Ausdehnung in eine bestimmte Richtung), die dichte Komponente jedoch nur um 5 % (bezogen auf ihre Ausgangslänge bzw. Ausdehnung ein eine bestimmte Richtung).

Dabei kann es insbesondere so sein, dass die offen-poröse Komponente während des Aushärtens ausgeprägter schrumpft als die dichte Komponente. Insofern ist es vorteilhaft, wenn die dichte Komponente nicht zu Beginn des Aushärtens der offen-porösen Komponente mit dieser verbunden wird (da in diesem Fall durch die verschieden ausgeprägten Schrumpfungen ein Verzug entsteht, der sich beispielsweise durch ein Aufbiegen äußert) noch ganz am Ende des Aushärtens (da dann die offen-poröse Komponente sich hinsichtlich ihrer Dimensionierung, insbesondere Länge, nicht mehr ändert, sich jedoch die dichte Komponente beim entsprechenden Aushärten noch ändert, was wiederum zu einem Aufbiegen oder einer sonstigen ungewünschten Formänderung führen kann).

Bei dem Zeitfenster kann es sich um eine Zeitspanne mit festem Anfangs- und Endzeitpunkt handeln (beispielsweise ein Zeitfenster beginnend mit 60 Stunden nach Beginn des Aushärten der offen-porösen Schicht bis 80 Stunden nach Beginn dieses Aushärtens) oder um ein Schrumpfungsfenster (in dem Sinne, dass die dichte Komponente mit der offen-porösen Komponente verbunden wird, wenn ein bestimmter Schrumpfungszustand der offen-porösen Komponente vorliegt, beispielsweise eine Schrumpfung der Länge bzw. Ausdehnung in eine bestimmte Richtung der offen-porösen Komponente um mindestens 4 %, was dann beispielsweise dem Beginn des Zeitfensters entspräche, und 8 %, was dann in diesem Beispiel dem Ende des Zeitfensters entsprechen würde).

Ein Startzeitpunkt für des Zeitfenster kann bei mindestens 5 % einer Gesamtschrumpfung liegen (wenn die offen-poröse Komponente beispielsweise insgesamt um eine Gesamt-Schrumpfung von 2 cm schrumpft, soll eine Prozentangabe von beispielsweise 5 % bedeuten, dass die Probe zu diesem Zeitpunkt um 1 mm geschrumpft ist) oder bei mindestens 10 % oder mindestens 30 %.

Ein Endzeitpunkt für des Zeitfenster kann bei höchstens 95 %, ggf. höchstens 90 % oder höchstens 70 %, der Gesamt-Schrumpfung liegen.

Insoweit ein Schrumpfungsverhalten der offen-porösen bzw. dichten Komponente beschrieben wird, soll insbesondere ein Schrumpfungsverhalten gemeint sein, bei dem die jeweilige Komponente (zumindest gedacht) isoliert vorliegt (es sei denn im jeweiligen Zusammenhang ist auf etwas anderes hingewiesen). Eine tatsächliche Schrumpfung der offen-porösen Komponente kann beispielsweise zumindest lokal durch Aufbringen der dichten Komponente beeinflusst werden (und/oder umgekehrt, was in dem oben beschriebenen Verformen (Aufbiegen) resultieren kann). Wenn es um das konkrete Schrumpfungsverhalten der jeweiligen Komponenten geht, soll ein solcher Zustand jedoch nicht betrachtet werden.

Vorzugsweise wird das Zeitfenster so festgelegt (bzw. bestimmt, beispielsweise im Vorfeld oder auch während der Herstellung), dass ein unterschiedliches Schrumpfverhalten einerseits der offen-porösen Schicht während ihres Aushärtens sowie andererseits der dichten Schicht während ihres Aushärtens zumindest teilweise ausgeglichen wird.

Ein zumindest teilweiser Ausgleich soll insbesondere wie folgt verstanden werden: Nachfolgend wird in einem ersten Szenario davon ausgegangen, dass gleichdimensionierte Probekörper (zumindest Probekörper gleicher Länge) sowohl für die offen-poröse Komponente als auch für die dichte Komponente bereitgestellt werden und das Aushärten derselben zum selben Zeitpunkt (unter denselben Bedingungen) erfolgt. Am Ende wird zwischen den beiden Probekörpern eine Längendifferenz X vorliegen. In einem zweiten Szenario wird die gleiche Probe der offen-porösen Komponente (zumindest im Wesentlichen) vollständig ausgehärtet. Daraufhin wird eine Probe der dichten Schicht mit einer Dimensionierung (bzw. zumindest Länge), die der vollständig ausgehärteten offen-porösen Probe entspricht, bereitgestellt und ausgehärtet. Diese dichte Komponente wird bei diesem Szenario am Ende kürzer sein als die offen-poröse Probe und zwar um einen Betrag Y. In einem dritten (grundsätzlich erfindungsgemäßen) Szenario wird die offen-poröse Schicht zunächst teilausgehärtet, so dass ihre Dimensionierung (insbesondere Länge) schrumpft. Zu einem bestimmten Zeitpunkt wird dann eine Probe der dichten Komponente (in ihrem Ausgangszustand) einer Länge bereitgestellt, die der Länge der offen-porösen Komponente zu diesem Zeitpunkt im teil-ausgehärteten Zustand entspricht. Ein Längenunterschied nach vollständigem Aushärten beider Proben wird als Z bezeichnet. Unter einem zumindest teilweisen Ausgleichen des unterschiedlichen Schrumpfverhaltens ist dann insbesondere zu verstehen, dass Z kleiner als X und Z kleiner als Y. Vorzugsweise ist Z kleiner als 0,9-mal, vorzugsweise kleiner als 0,5-mal, noch weiter vorzugsweise kleiner als 0,2-mal als das Minimum von X und Z.

Ein Schrumpfungsverhalten der offen-porösen Komponente und/oder der dichten Komponente während des jeweiligen Aushärtens unter vorbestimmten Bedingungen kann experimentell und/oder analytisch und/oder mittels Simulation bestimmt werden. Beispielsweise kann das Schrumpfungsverhalten anhand eines Testdurchlaufs (oder einer Serie von Testdurchläufen) bestimmt werden. Alternativ oder zusätzlich ist es auch möglich, dass das Schrumpfungsverhalten berechnet wird (beispielsweise mit e-Funktionen, die die Schrumpfung beschreiben). Nochmals alternativ oder zusätzlich kann ein Schrumpfungsverhalten auch simuliert werden (beispielsweise mit einem entsprechenden Computerprogramm).

Eine Größen-, insbesondere Längenänderung der offen-porösen und/oder dichten Komponente kann (während des jeweiligen Aushärtens) überwacht werden. Vorzugsweise wird bei Unterschreiten einer vorbestimmten Größe bzw. Länge der offen-porösen Komponente die dichte Komponente mit der offen-porösen Komponente verbunden.

In einer bevorzugten Ausführungsform wird die dichte Komponente mit der offen-porösen Komponente zu einem Zeitpunkt verbunden, bei dem eine jeweilige Schrumpfung bzw. Restschrumpfung aufgrund des Aushärtens zumindest im Wesentlichen gleich ist. Unter einer (zumindest im Wesentlichen) gleichen Schrumpfung bzw. Restschrumpfung ist zu verstehen, dass eine relative Schrumpfung (zumindest in etwa) gleich ist (was beispielsweise bei zwei Proben gleicher Ausgangslänge bedeutet, dass auch eine absolute Schrumpfung gleich wäre). Unter einer relativen Schrumpfung A ist wiederum folgendes zu verstehen: A = 1-(l₀-(l₀-lₑ))/l₀ = 1 - (lₑ/l₀), mit der Ausgangsgröße (Ausgangslänge) l₀ und der Endgröße (Endlänge) lₑ des jeweilig betrachteten Schrumpfungsprozesses (oder Teil-Schrumpfungsprozesses). Vorzugsweise ist die relative Schrumpfung bzw. relative Restschrumpfung der offen-porösen Komponente mindestens 0,7-mal, vorzugsweise mindestens 0,9-mal und/oder höchstens 1,5-mal, vorzugsweise 1,1-mal so groß wie die entsprechende (relative) Schrumpfung (bzw. Restschrumpfung) der dichten Komponente.

In Ausführungsformen wird die dichte Komponente in flüssigem oder pastösem Zustand mit der (vorzugsweise bereits teil-ausgehärten) offen-porösen Komponente verbunden, beispielsweise durch Aufgießen und/oder Aufrakeln. Alternativ kann die dichte Komponente auch in bereits festem (aber nicht vollständig ausgehärtetem) Zustand mit der (ebenfalls nicht vollständig ausgehärteten) offen-porösen Komponente verbunden werden, beispielsweise durch Verkleben mittels eines Klebstoffes (ggf. auf PMMA-Basis). Auch ist es alternativ möglich, dass sich zum Zeitpunkt des Verbindens der beiden Komponenten die offen-poröse Komponente noch in einem flüssigen oder pastösen Zustand befindet und die dichte Komponente in einem festen Zustand.

Die offen-poröse Komponente wird vorzugsweise am Ende des Aushärtens der beiden (verbundenen) Komponenten, insbesondere für ihre endgültige Formgebung, materialabtragend geformt, vorzugsweise gefräst. Dadurch kann eine besonders genaue Ausformung erfolgen (beispielsweise eine trotz des erfindungsgemäßen Verfahrens verbleibende Rest-Aufbiegung bzw. Rest-Verformung ausgeglichen werden).

In jedem Fall ist ein Vorteil der Erfindung auch darin zu sehen, dass eine derartige Materialabtragung (bzw. Fräsung), wenn überhaupt noch nötig, vergleichsweise gering ausfallen kann, da keine übermäßige Verformung kompensiert werden muss. Dies bedeutet auch, dass nicht an manchen Stellen (beispielsweise wegen einer Aufbiegung oder sonstigen Verformung) besonders viel Material übertragen werden muss und an anderen Stellen wiederum weniger, was letztlich eine uneinheitliche Schichtdicke der offen-porösen Komponente bedeuten würde, mit entsprechend uneinheitlicher Entwässerung.

Die offen-poröse Komponente umfasst vorzugsweise: mindestens einen Kunststoff, weiter vorzugsweise mindestens ein Acrylat, weiter vorzugsweise PMMA.

Die dichte Komponente umfasst vorzugsweise: mindestens einen Kunststoff, vorzugsweise mindestens ein Acrylat, weiter vorzugsweise PMMA, und/oder ein Kunsthart, vorzugsweise Epoxidharz und/oder eine Faser-, vorzugsweise Kohle-und/oder Glasfaserkomponente.

Die obengenannte Aufgabe wird weiterhin gelöst durch ein Formteil für eine Schlicker-Druckgießform, hergestellt mit dem Verfahren nach einem der vorangehenden Ansprüche.

Die obengenannte Aufgabe wird weiterhin gelöst durch eine Schlicker-Druckgießform, umfassend mindestens ein Formteil hergestellt mit dem obigen Verfahren.

Die obengenannte Aufgabe wird weiterhin gelöst durch ein System zum Durchführen des obigen Verfahrens, umfassend eine erste Ausgangskomponente zur Herstellung der offen-porösen Komponente, eine zweite Ausgangskomponente zur Herstellung der dichten Komponente sowie mindestens eine Messeinrichtung zur Messung eines Schrumpfungsverhaltens, insbesondere einer Längenänderung, der offen-porösen Komponente und/oder der dichten Komponente.

Zur Herstellung der offen-porösen Komponente (bzw. einer entsprechenden auszuhärtenden Ausgangskomponente) kann in einem konkreten Beispiel Dibenzoylperoxid und/oder Dicyclohexylphthalat (z. B. als Gil-Resin^{®} AP/P) mit Methylmethacrylat-Styrol (z. B. Gil-Resin^{®} T/Monomermix stab) und ggf. mit Benzisothiazolinon, insbesondere 1,2-Benzisothiazolin-3-on (bereitgestellt z- B . durch "Gil-Resin^{®}-granulated component GP") vermischt (verrührt) werden. Weiterhin kann Wasser hinzugesetzt werden.

Die dichte Komponente kann ebenfalls Dibenzoylperoxid und/oder Dicyclohexylphthalat (z. B. als Gil-Resin^{®} AP/P) mit Methylmethacrylat-Styrol (z. B. Gil-Resin^{®} T/Monomermix stab) umfassen (ggf. ohne dass Wasser zugesetzt wird).

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Darstellung einer offen-porösen Komponente für ein Formteil für eine Schlicker-Druckgießform sowie ein Messmittel;
- Fig. 2: eine schematische Darstellung einer Schlicker-Druckgießform gemäß einer ersten Variante;
- Fig. 3: eine Schlicker-Druckgießform gemäß einer weiteren Variante;
- Fig. 4: die Schlicker-Druckgießform nach Fig. 3 mit voneinander getrennten Formteilen;
- Fig. 5: ein erstes Diagramm über das Zeit-Längenverhalten der beiden Komponenten;
- Fig. 6: ein Diagramm über ein zeitliches Verhalten des Längenunterschiedes zwischen den beiden Komponenten korrespondierend zu Fig. 5;
- Fig. 7: eine weitere Darstellung eines Zeit-Längenverhaltens analog Fig. 5;
- Fig. 8: ein Diagramm über den Längenunterschied korrespondierend mit Fig. 7;
- Fig. 9: ein Diagramm korrespondierend mit Fig. 5 und 7 über das Zeit-Längenverhalten der beiden Komponenten;
- Fig. 10: ein Diagramm über den Längenunterschied der beiden Komponenten korrespondierend mit Fig. 9.

In der nachfolgenden Beschreibung werden für gleiche und gleich wirkende Teile dieselben Bezugsziffern verwendet.

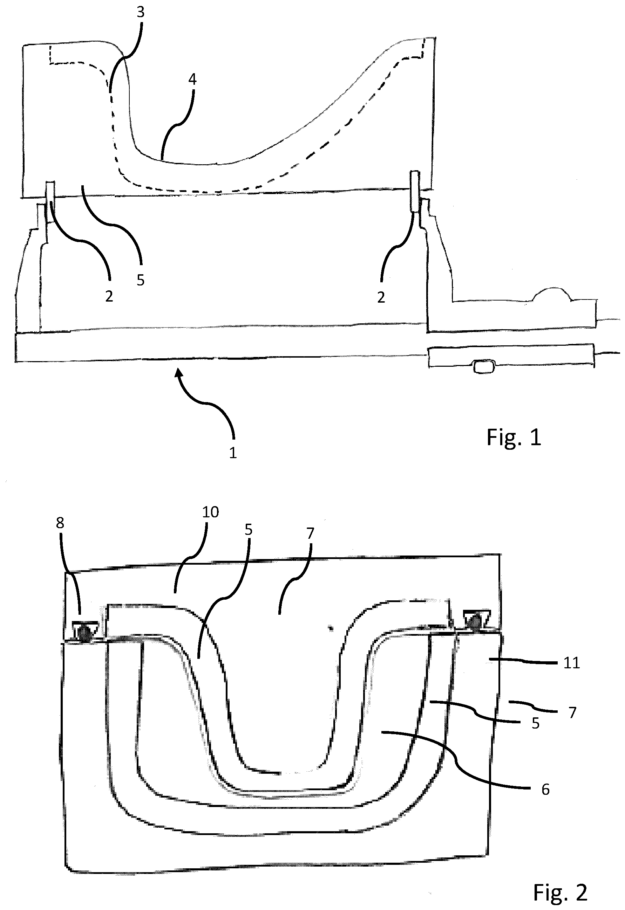

Fig. 1 zeigt schematisch ein Messmittel (eine Messeinrichtung) 1 sowie eine offen-poröse Komponente 5. In bzw. an der offen-porösen Komponente 5 sind Distanz-Marker (in Form von Distanz-Pins) 2 angeordnet. Während des Aushärtens schrumpft die offen-poröse Komponente 5, was durch das Messmittel 1 überwacht werden kann. Dadurch wird es ermöglicht, dass zu einem günstigen Zeitpunkt eine (in Fig. 1 nicht gezeigte) dichte Schicht (Abdeckschicht bzw. Versiegelungsschicht) auf eine Kontaktfläche 4 aufgebracht wird. Die gestrichelte Linie 3 deutet die spätere Artikeloberfläche an. Diese Artikeloberfläche 3 kann dann beispielsweise durch Abtragen (Abfräsen) von Material der offen-porösen Komponente 5 erfolgen.

Fig. 2 zeigt eine Schlicker-Druckgießform mit einem ersten Formteil 10 sowie einem zweiten Formteil 11. Die beiden Formteile 10, 11 umfassen beide jeweils eine offen-poröse Komponente 5 sowie eine dichte Komponente (Versiegelungsschicht) 7. Die beiden Formteile 10, 11 sind über eine Dichtung 8 gegeneinander abgedichtet. Über (nicht dargestellte) Öffnungen kann Schlicker eingebracht werden und/oder Flüssigkeit (Wasser) abgeführt werden. In der Ausführungsform nach Fig. 2 ist die dichte Komponente 7 (jeweils) als massiver Block gegossen (was nicht zwingend ist). Mit dem Bezugszeichen 6 ist ein Hohlraum dargestellt (zwischen den beiden Formteilen), in dem die keramische Masse (Schlicker) eingefüllt werden kann.

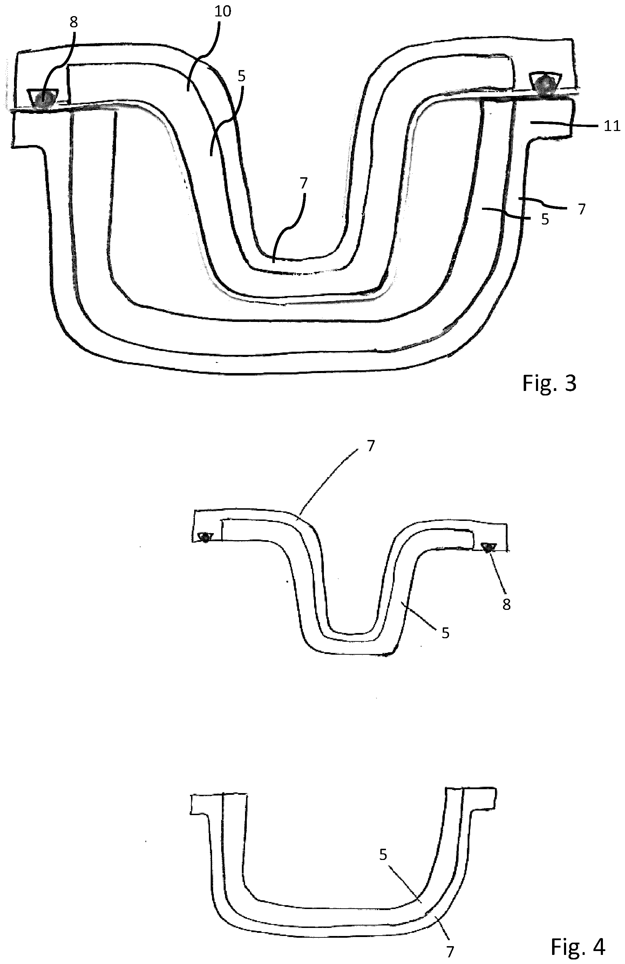

In Fig. 3 ist eine Ausführungsform für die Schlicker-Druckgießform gezeigt, bei der die (jeweilige) dichte Komponente 7 eingegossen oder auflaminiert sein kann. In Fig. 4 ist die Ausführungsform nach Fig. 3 gezeigt, wobei erste und zweite Formteile 10, 11 voneinander getrennt sind.

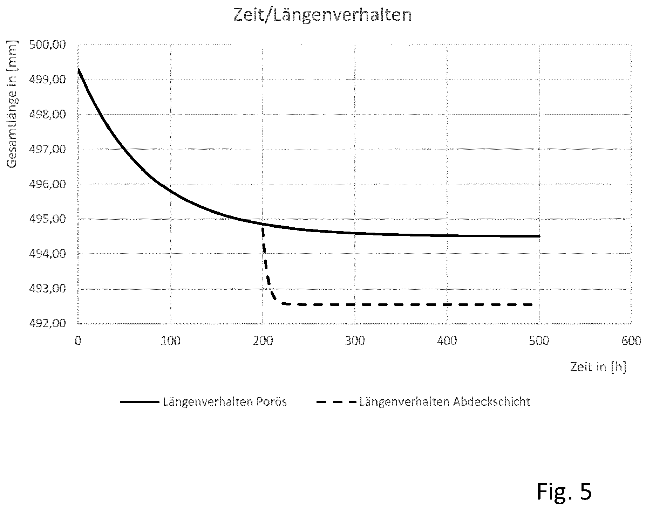

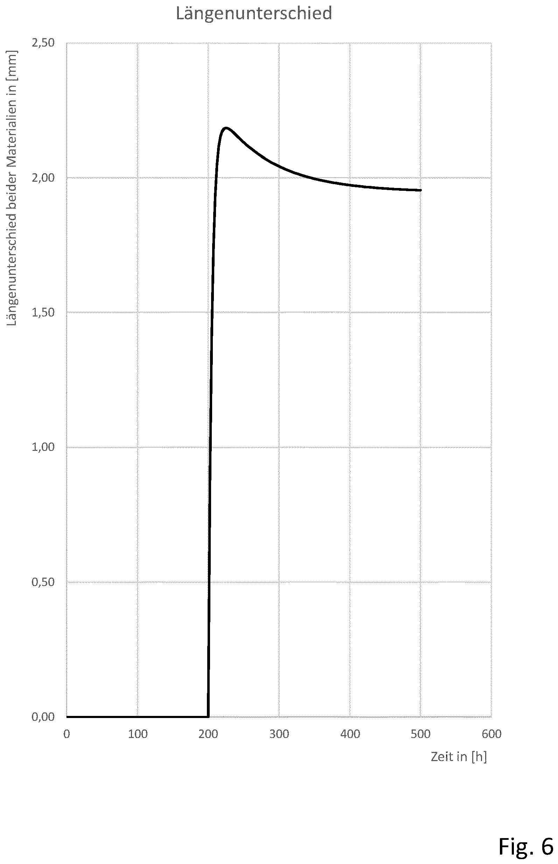

In Fig. 5 ist ein Zeit-Längenverhalten der offen-porösen Komponente (durchgezogen dargestellt) sowie der dichten Komponente (gestrichelt dargestellt) erkennbar. In diesem Beispiel fängt die dichte Komponente, (ca.) 200 Stunden nachdem die offen-poröse Komponente angefangen hat auszuhärten, an auszuhärten. Wie man in Fig. 5 und insbesondere auch Fig. 6 erkennt, resultiert am Ende ein vergleichsweise großer Längenunterschied zwischen den beiden Komponenten bzw. Schichten.

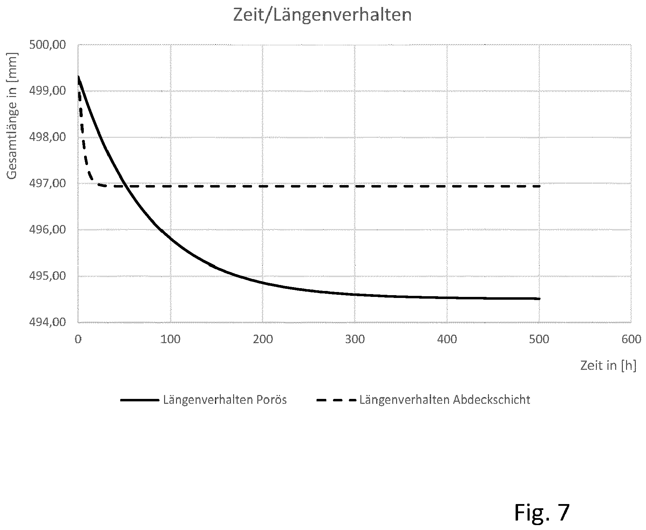

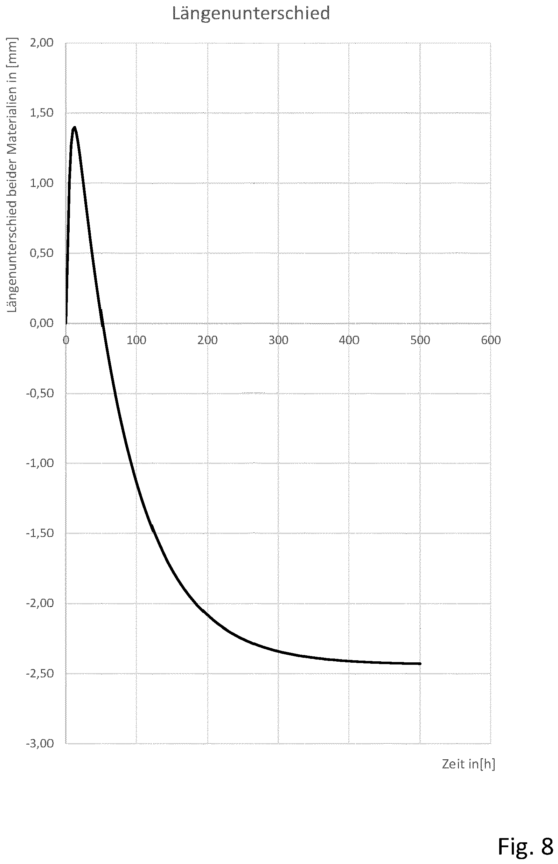

Fig. 7 zeigt ein Zeit-Längenverhalten, wobei die dichte Schicht (gestrichelte Linie) zu dem Zeitpunkt anfängt auszuhärten, zu dem die offen-poröse Schicht anfängt auszuhärten. Auch hier (vgl. insbesondere auch Fig. 8) erkennt man einen großen am Ende resultierenden Längenunterschied.

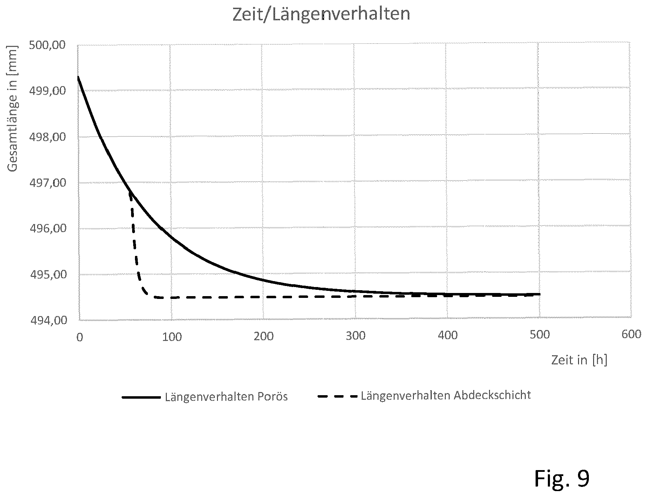

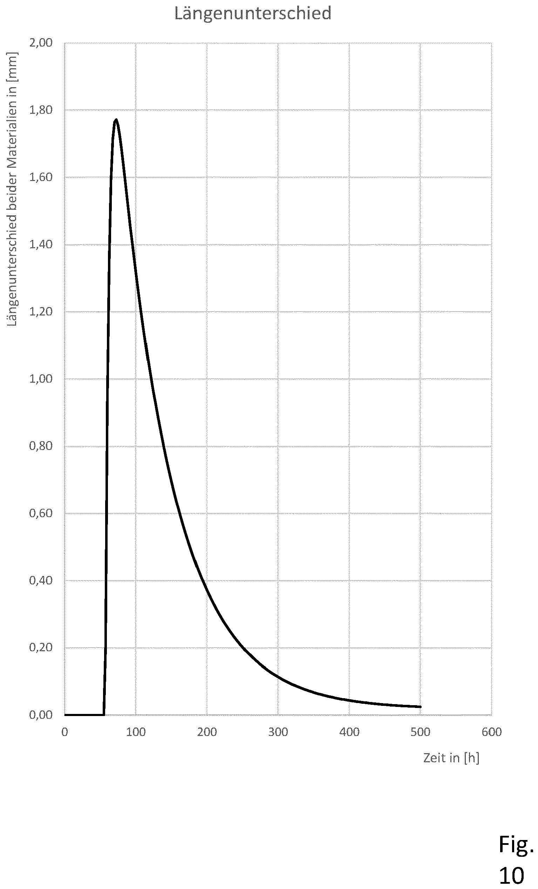

In Fig. 9 hingegen ist erkennbar, dass dort die dichte Schicht (gestrichelte Linie) zu einem Zeitpunkt auf die bereits teil-ausgehärte offen-poröse Schicht aufgebracht wird, der so gewählt ist, dass am Ende kein wesentlicher Längenunterschied (siehe auch Fig. 10) resultiert. In diesem Beispiel wurde die dichte Komponente nach (etwa) 60 h aufgebracht.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.
- 1: Messmittel
- 2: Distanz-Markierung (Distanz-Pin)
- 3: Artikeloberfläche
- 4: Kontaktfläche zur dichten Komponente (Versiegelungsschicht)
- 5: offen-poröse Komponente (Schicht)
- 6: Hohlraum
- 7: dichte Komponente
- 8: Dichtung
- 10: erstes Formteil
- 11: zweites Formteil

## Patentansprüche

1. Verfahren zum Herstellen eines Formteils (10, 11) für eine Schlicker-Druckgießform, umfassend mindestens eine offen-poröse Komponente (5), an die während des Schlickergusses der Schlicker anliegt, sowie eine dichte Komponente (7), die mit der offen-porösen Komponente verbunden wird,
**dadurch gekennzeichnet, dass**
die dichte Komponente (7), in zumindest noch nicht vollständig ausgehärtetem Zustand, innerhalb eines Zeitfensters nach einem Beginn und vor einem Ende eines Aushärtens der offen-porösen Komponente (5) mit derselben verbunden wird.

2. Verfahren nach Anspruch 1,
**dadurch gekennzeichnet, dass**
das Zeitfenster so festgelegt wird, dass ein unterschiedliches Schrumpfverhalten einerseits der offen-porösen Komponente (5) während ihres Aushärtens sowie andererseits der dichten Komponente (7) während ihres Aushärtens zumindest teilweise ausgeglichen wird.

3. Verfahren nach Anspruch 1 oder 2,
**dadurch gekennzeichnet, dass**
ein Schrumpfungsverhalten der offen-porösen Komponente (5) und/oder der dichten Komponente (7) während des jeweiligen Aushärtens unter vorbestimmen Bedingungen experimentell und/oder analytisch und/oder mittels Simulation bestimmt wird.

4. Verfahren nach einem der vorangehenden Ansprüche,
**dadurch gekennzeichnet, dass**
eine Größen-, insbesondere Längenänderung der offen-porösen (5) und/oder dichten (7) Komponente während des jeweiligen Aushärtens überwacht wird, wobei besonders bevorzugt bei Unterschreiten einer vorbestimmten Größe bzw. Länge der offen-porösen Komponente (5) die dichte Komponente (7) mit der offen-porösen Komponente (5) verbunden wird.

5. Verfahren nach einem der vorangehenden Ansprüche,
**dadurch gekennzeichnet, dass**
die dichte Komponente (7) mit der offen-porösen Komponente (5) zu einem Zeitpunkt verbunden wird, bei dem eine jeweilige Schrumpfung bzw. Restschrumpfung aufgrund des Aushärtens zumindest im Wesentlichen gleich ist.

6. Verfahren nach einem der vorangehenden Ansprüche,
**dadurch gekennzeichnet, dass**
die dichte Komponente (7) in flüssigem oder pastösem Zustand mit der, vorzugsweise bereits teil-ausgehärteten, offen-porösen Komponente (5) verbunden wird.

7. Verfahren nach einem der vorangehenden Ansprüche,
**dadurch gekennzeichnet, dass**
die offen-poröse Komponente (5) am Ende des Aushärtens der beiden Komponenten (5,7), insbesondere für ihre endgültige Formgebung, materialabtragend geformt wird, vorzugsweise gefräst wird.

8. Verfahren nach einem der vorangehenden Ansprüche,
**dadurch gekennzeichnet, dass**
die offen-poröse Komponente (5) umfasst: mindestens einen Kunststoff, vorzugsweise mindestens ein Acrylat, weiter vorzugsweise PMMA und/oder
die dichte Komponente (7) umfasst: mindestens einen Kunststoff, vorzugsweise mindestens ein Acrylat, weiter vorzugsweise PMMA, und/oder ein Kunstharz, vorzugsweise Epoxidharz, und/oder eine Faser-, vorzugsweise Kohle- und/oder Glasfaserkomponente.

9. Formteil (10, 11) für eine Schlicker-Druckgießform, hergestellt mit dem Verfahren nach einem der vorangehenden Ansprüche.

10. System zum Durchführen des Verfahrens nach einem der Ansprüche 1 bis 8, umfassend eine erste Ausgangskomponente zur Herstellung der offen-porösen Komponente (5), eine zweite Ausgangskomponente zur Herstellung der dichten Komponente (7) sowie mindestens eine Messeinrichtung (1) zur Messung eines Schrumpfungsverhaltens, insbesondere einer Längenänderung, der offen-porösen Komponente und/oder der dichten Komponente.
